# EUROPÄISCHE PATENTSCHRIFT

(11) **EP 0 953 024 B1**
(45) Veröffentlichungstag und Bekanntmachung des Hinweises auf die Patenterteilung: **14.11.2001**
(21) Anmeldenummer: 98907941.3
(22) Anmeldetag: 13.01.1998
(51) Int. Cl.: C09G 1/08

(54) **VERWENDUNG VON WACHS**
USE OF WAX
UTILISATION DE LA CIRE

(30) Priorität: 15.01.1997 DE 19701012
(43) Veröffentlichungstag der Anmeldung: 03.11.1999
(73) Patentinhaber: Sachtleben Chemie GmbH, 47198 Duisburg (DE)
(72) Erfinder: HOCKEN, Jörg, D-40670 Meerbusch (DE); KARL, Wolf-Rüdiger, D-47196 Duisburg (DE); SCHULTE, Klaus, D-46519 Alpen (DE)
(74) Vertreter: Uppena, Franz, Dr.
(86) Internationale Anmeldenummer: EP9800160
(87) Internationale Veröffentlichungsnummer: WO9831758

(56) Entgegenhaltungen:
- DE-A- 3 824 999
- PATENT ABSTRACTS OF JAPAN vol. 012, no. 297 (C-519), 12.August 1988 & JP 63 066273 A (IDEMITSU KOSAN CO LTD), 24.März 1988,

## Beschreibung

Die Erfindung betrifft die Verwendung von Wachs zur Behandlung von Holz- und Lederoberflächen.

Zur Pflege von Holz- und Lederoberflächen sind wachshaltige Präparate in Form von Pasten auf Lösungsmittelbasis, rieselfähigen Pulvern, Dispersionen in organischen Lösungsmitteln, flüssigen oder pastösen Emulsionen mit oder ohne Lösungsmittel, Mischungen mit Kunststoffen oder Wachsaerosolen bekannt.

Nach ihrer Herkunft teilt man die Wachse in drei Gruppen ein:
1. Natürliche Wachse, zu denen pflanzliche Wachse, tierische Wachse, Mineralwachse und petrochemische Wachse zählen,
2. Chemisch modifizierte Wachse, zu denen insbesondere die Hartwachse gehören,
3. Synthetische Wachse.

Soweit diese Wachse für die Pflege von Holz- oder Lederoberflächen benutzt werden, bieten sie keinen Schutz vor dem schädigenden Einfluß von sichtbarem und kurzwelligem Licht des UV-Wellenlängenbereichs 280 bis 800 nm, so daß die Oberflächen von Holzmöbeln, Ledergarnituren, Lederschuhen, Ledertaschen und Lederbekleidung in relativ kurzer Zeit schon während ihrer Ausstellung und Lagerung oder beim Gebrauch sich verfärben. Organische Absorptionsmittel sind, da die wachshaltigen Präparate in nur relativ dünnen Schichten auf Holz- oder Lederoberflächen aufgetragen werden, wenig wirksam; darüber hinaus sind die meisten organischen Absorptionsmittel im Hinblick auf die Gesundheit nicht unbedenklich.

Die JP-A-63 066273 beschreibt allgemein einen vor ultraviolettem Licht schützenden Überzugfilm aus wachsmaterial Silikonölen, metallischer Seife, anorganischem Pulver, sphärischen Partikeln aus Titandioxid und/oder Titanhydroxid und einem Kohlenwasserstofflösungsmittel.

Es ist die Aufgabe der vorliegenden Erfindung, Wachse zur Behandlung von Holz- und Lederoberflächen bereitzustellen, die einen dauerhaften Schutz gegen die schädigende Wirkung von Lichtstrahlen im Wellenlängenbereich von 280 bis 800 nm gewährleisten.

Die Lösung dieser Aufgabe erfolgt durch die Verwendung von Wachs mit einem Gehalt von 0,5 bis 20 Gew.-% an feinstteiligem transparentem Titandioxid mit einer Kristallitgröße von 5 bis 50 nm zur Behandlung von Holz- und Lederoberflächen. Mit derartigen Wachsen ist ein langfristiger Schutz der Holz- und Lederoberflächen gegen den schädigenden Einfluß von sichtbarem und kurzwelligem Licht des. UV-Wellenlängenbereichs 280 bis 800 nm erreicht. Die Titandioxid-Teilchen lassen sich auf einfache Weise in schmelzflüssige niedrigviskose wachshaltige Präparate einrühren und werden dabei homogen verteilt. Die Titandioxid-Teilchen lassen sich auch problemlos in flüssigen Emulsionen dispergieren.

Der Anteil an Titandioxid gewährleistet eine ausreichende Stabilität gegen Lichtstrahlung der UVA und UVB.

Die Titandioxid-Teilchen können eine anorganische Dotierung aufweisen.

Die Titanoxid-Teilchen können auch eine vorteilhafte Dotierung mit Aluminiumoxid oder Zirkoniumoxid erfahren. Die Dotierung der Titandioxid-Teilchen verbessert die Wetterbeständigkeit.

Eine organische Beschichtung der Titandioxid-Teilchen erleichtert deren Benetzbarkeit und Dispergierbarkeit.

Gegenstand der Erfindung ist auch die Verwendung der TiO₂-haltigen Wachse, bei dem als Titandioxid dessen Modifikation Rutil benutzt wird, zur Pflege von Holz- und Lederoberflächen, die sich in offenen Räumen oder im Freien befinden, d.h. die unmittelbar den Athmosphärilien ausgesetzt sind.

Zur Pflege der Oberflächen von in geschlossenen Räumen untergebrachten Gegenständen aus Holz oder Leder hat es sich als vorteilhaft erwiesen, wenn die Titandioxid-Teilchen aus der Kristallmodifikation Anatas bestehen.

Die Erfindung ist nachfolgend anhand eines vergleichenden Ausführungsbeispiels näher erläutert.

Auf die Oberfläche eines ersten Buchenholzbretts wurde ein handelsüblicher Möbelwachs (Antikwachs) appliziert. Ein zweites Buchenholzbrett wurde mit dem handelsüblichen Möbelwachs, dem 10% eines herkömmlichen UV-Absorbers (z. B. Benzophenon) zugemischt war, beschichtet. Auf die Oberfläche eines dritten Buchenholzbretts wurde der handelsübliche Möbelwachs, in de m 10 Gew.% feinteiliges Titandioxid der Rutil-Modifikation mit einer Kristallitgröße von ca. 20 nm ( nach Scherrer) gleichmäßig dispergiert waren, aufgetragen. Anschließend wurden die drei beschichteten Buchenholzbretter in eine Q.U.V.-Schnellbewitterungsanlage eingesetzt, die eine Simulierung der schädigenden Einwirkung des UV-Lichts zum Zwecke der Voraussage der Stabilität gegen UV-Strahlung ermöglicht. Die UV-Lampen erzeugen hauptsächlich ein UV-Licht mit den Wellenlängenbereichen von 280 bis 800 nm, d. h. die eingesetzten Buchenbretter wurden der UV-A- und UV-B-Strahlung ausgesetzt. Die Bestrahlungsdauer betrug für alle drei Buchenholzbretter 100 Stunden.

Die nach dieser Zeit vorgenommene visuelle Begutachtung der Buchenholzbretter läßt eine deutliche Vergilbung sowohl des nur mit Möbelwachs, als auch des mit einen organischen UV-Absorber enthaltenden Möbelwachs behandeltem Buchenholzbrett erkennen. Das Buchenholzbrett, das mit Möbelwachs beschichtet war, welches mit feinteiligem transparenten Titandioxid der Rutil-modifikation versetzt war, zeigt keinerlei Veränderung gegenüber dem ursprünglichen Farbton. Bestätigt wird dieses Ergebnis auch durch zusätzliche Remissionsmessungen mit Grünfiltern an den drei Buchenholzbrettern. Der auf diese Weise gemessene Helligkeitswert Ry des nicht modifizierten und des mit herkömmlichen UV-Absorbern versetzten Möbelwachses liegen um ca. 10 % niedriger als der Helligkeitswert der Möbelwachsschicht, in der feinstteiliges transparentes Titandioxid gleichmäßig dispergiert ist. Weiterhin läßt sich feststellen, daß die Buchenholzbretter, die mit nicht modifiziertem Möbelwachs und mit durch den Zusatz von herkömmlichen UV-Absorbern modifi- zierten Möbelwachs beschichtet sind, einen deutlichen Gelbstich zeigen, verglichen mit dem Buchenholzbrett, das mit Titandioxid enthaltene Möbelwachs beschichtet ist.

## Patentansprüche

1. Verwendung von Wachs mit einem Gehalt von 0,5 bis 20 Gew.-% an feinstteiligem transparenten Titandioxid mit einer Kristallitgröße von 5 bis 50 nm zur Behandlung von Holz-und Lederoberflächen.

2. Verwendung von Wachs nach Anspruch 1, **dadurch gekennzeichnet, daß** die Titandioxid-Teilchen eine anorganische Dotierung aufweisen.

3. Verwendung von Wachs nach einem der Ansprüche 1 und 2, **dadurch gekennzeichnet, daß** die Titandioxid-Teilchen vorzugsweise mit Aluminium- oder Zirkoniumoxid dotiert sind.

4. Verwendung von Wachs nach einem der Ansprüche 1 bis 3, **dadurch gekennzeichnet, daß** die Oberfläche der Titandioxid-Teilchen eine organische Beschichtung aufweisen.

5. Verwendung von Wachs nach einem der Ansprüche 1 bis 4, **dadurch gekennzeichnet, daß** die Titandioxid-Teilchen aus der Kristallmodifikation Rutil bestehen.

6. Verwendung von Wachs nach einem der Ansprüche 1 bis 4, **dadurch gekennzeichnet, daß** die Titandioxid-Teilchen aus der Kristallmodifikation Anatas bestehen.

## Claims

1. Use of wax with a content of 0.5 to 20 % by weight of very finely divided transparent titanium dioxide having a crystallite size of 5 to 50 nm for the treatment of wood and leather surfaces.

2. Use of wax according to claim 1, **characterized in that** the titanium-dioxide particles are inorganically doped.

3. Use of wax according to one of claims 1 and 2, **characterized in that** the titanium-dioxide particles are preferably doped with aluminium oxide or zirconium oxide.

4. Use of wax according to one of claims 1 to 3, **characterized in that** the surfaces of the titanium-dioxide particles have an organic coating.

5. Use of wax according to one of claims 1 to 4, **characterized in that** the titanium-dioxide particles consist of the rutile crystal modification.

6. Use of wax according to one of claims 1 to 4, **characterized in that** the titanium-dioxide particles consist of the anatase crystal modification.

## Revendications

1. Utilisation de cire contenant de 0,5 à 20 % en poids de dioxyde de titane réduit en particules très fines, transparent, avec une dimension de cristallites comprise dans une plage allant de 5 à 50 nm, pour le traitement de surfaces en bois ou en cuir.

2. Utilisation de cire selon la revendication 1, **caractérisée en ce que** les particules de dioxyde de titane présentent un dopage minéral.

3. Utilisation de cire selon une des revendications 1 et 2, **caractérisée en ce que** les particules de dioxyde de titane, de préférence, sont dopées à l'oxyde d'aluminium ou à l'oxyde de zirconium.

4. Utilisation de cire selon une des revendications 1 à 3, **caractérisée en ce que** la surface des particules de dioxyde de titane présente un revêtement organique.

5. Utilisation de cire selon une des revendications 1 à 4, **caractérisée en ce que** les particules de dioxyde de titane sont formées de cristaux de forme rutile.

6. Utilisation de cire selon une des revendications 1 à 4, **caractérisée en ce que** les particules de dioxyde de titane sont formées de cristaux de forme anatase.
